# EUROPEAN PATENT APPLICATION

(11) **EP 2 829 953 A1**
(43) Date of publication of application: **28.01.2015**
(21) Application number: 13177962.1
(22) Date of filing: 25.07.2013
(51) Int. Cl.: G06F 3/041

(54) **Method for operating a touch panel**

(71) Applicant: Sony Corporation, Tokyo 108-0075 (JP)
(72) Inventor: Hunt, Alexander, 21872 Tygelsjö (SE)
(74) Representative: Banzer, Hans-Jörg

(57) **Abstract**

The present invention relates to a method for operating a touch panel (12). The touch panel (12) comprises a plurality of touch sensors (15) for detecting a touch position (30) where an object touches the touch panel (12). According to the method, a touch position (30) is detected and a first touch sensor set (31) is determined based on the touch position (30). The first touch sensor set (31) comprises touch sensors (15) arranged within a predetermined distance to the touch position (30). Furthermore, a second touch sensor set is determined based on the touch position (30). The second touch sensor set comprises touch sensors (15) arranged outside the predetermined distance to the touch position (30). Then, the touch sensors (15) of the first touch sensor set (31) are scanned and furthermore a proper subset of the touch sensors (15) of the second touch sensor set is scanned.

## Description

### FIELD OF THE INVENTION

The present invention relates to a method for operating a touch panel, especially to a method for improving a scanning of a touch panel to get a high accuracy and high scanning speed to be able to follow the movement of an object that is touching the touch panel. The present invention relates furthermore to a control device and a mobile device implementing the method for operating the touch panel.

### BACKGROUND OF THE INVENTION

The consumer industry, especially the handset industry, is moving into a world where a stylus needs to be supported as an input means and high responsive touch panels are required. The stylus may comprise a finger or a pointing device like a pen for more accurate inputs. The stylus support demands touch panels with a closer sensor pitch. The closer sensor pitch comes along with an increasing amount of channels on a control device controlling the touch panel, a so-called touch IC, to get an acceptable accuracy. A high temporal responsiveness requires that the sensors need to be scanned quickly to be able to follow the movement of the object that is touching the touch panel. However, the increasing amount of needed channels and sensors increases the scanning time.

A handset, for example a mobile phone or a mobile music player, comprising a touch-sensitive display, a so-called touch screen, with a size of around 5 inches, may have a touch matrix set up of 23 rows and 12 columns. Thus, 276 sensor nodes need to be scanned for a complete scan of the touch screen. Large tablet PCs may have more than 2000 nodes to be scanned. For providing an acceptable temporal scanning, the touch panel needs to be scanned for example 50-60 times per second. However, in high speed applications, for example in gaming applications, higher scanning speeds or more scans per second are desired. Furthermore, to be able to keep the required temporal scanning, the scanning speed needs to be increased dramatically as the touch displays grow in size and the spatial resolution of the touch sensors increases.

Therefore, there is a need for an improved operating of a touch panel to provide a high responsiveness of the touch panel with respect to a temporal and spatial resolution.

### SUMMARY OF THE INVENTION

According to the present invention, this object is achieved by a method for operating a touch panel as defined in claim 1, a control device for controlling a touch panel as defined in claim 9, and a mobile device as defined in claim 11. The dependent claims define preferred and advantageous embodiments of the invention.

According to an aspect of the present invention, a method for operating a touch panel is provided. The touch panel comprises a plurality of touch sensors arranged at the touch panel for detecting a touch position where an object touches the touch panel. The touch panel may be combined with a display to form a so-called touch screen. According to the method, a touch position where the object touches the touch panel is detected. Based on the touch position a first touch sensor set is determined. The first touch sensor set comprises those touch sensors of the plurality of touch sensors which are arranged within a predetermined distance to the determined touch position. Furthermore, based on the touch position, a second touch sensor set is determined. The second touch sensor set comprises those touch sensors of the plurality of touch sensors which are arranged outside the predetermined distance to the touch position. In other words, the first touch sensor set comprises touch sensors in a predetermined close vicinity to the touch position and the second touch sensor set comprises the remaining touch sensors of the touch panel. According to the method, the touch sensors of the first touch sensor set are scanned and additionally a proper subset of the touch sensors of the second touch sensor set is scanned. In other words, the touch sensors in the predetermined vicinity of the touch position are scanned completely and only a proper subset of the remaining touch sensors are scanned. The term "proper subset" defines that only a part and not all of the touch sensors of the second touch sensor set are scanned. The proper subset is also called strict subset. Based on the scanning of the sensors of the first touch sensor set and the proper subset of the second touch sensor set the actual touch position may be determined. By reducing the total amount of touch sensors to be scanned, the scanning speed can be increased to get a better responsiveness and still have a closer sensor pitch. From one scanning cycle to the following scanning cycle the object touching the touch panel usually moves only within a small distance. Therefore, by scanning the first touch sensor set completely, a high spatial resolution of the area where the object presumably touches the touch panel can be provided. By scanning only a proper subset of the remaining touch sensors, the object touching the touch panel can be roughly determined, for example in case the object has moved very quickly or in case a second object touches the touch panel.

According to an embodiment, the plurality of touch sensors is arranged in a grid comprising a plurality of rows and a plurality of columns. Each of the touch sensors is associated with a corresponding crossing point of one of the rows with one of the columns. The partial scanning of the touch sensors of the second touch sensor set, i.e. the scanning of the proper subset, may be performed in that not every row and every column of the grid is scanned, but only those touch sensors of the second touch sensor set which are associated with every n-th row and m-th column of the grid. n and m are integers and the sum n+m is at least 3, that means that not every row or not every column of the grid is scanned. Preferably, only every third row and every third column of the grid are scanned. Thus, a considerably speed improvement in scanning the sensors can be achieved, as only one of nine sensors needs to be scanned. A scanning sensitivity of the scanned sensors of the second touch sensor set may be increased such that an object touching the touch panel in an area of the second touch sensor set is reliably recognized. However, the spatial resolution in the area of the second touch sensor set may be reduced at that point in time, but may be increased during the next scan of the touch panel based on the detected touch position as described above.

According to a further embodiment, the first touch sensor set comprises those touch sensors which are associated with rows arranged within a first predetermined distance to a row of the detected touch position and which are associated with columns arranged within a second predetermined distance to a column of the detected touch position. Thus, the first and second predetermined distances define a rectangular area around the detected touch position as the first touch sensor set. The rows may be arranged in the grid at a first uniform distance between the rows and the first predetermined distance may be two times the first uniform distance. In other words, sensors which are arranged in the two rows above and below the detected touch position are associated to the first touch sensor set. Furthermore, the columns may be arranged in the grid at a second uniform distance between the columns and the second predetermined distance may be two times the second uniform distance. Again, those sensors which are arranged two columns left and right to the detected touch position may be included in the first touch sensor set. Thus, the first touch sensor set may comprise the sensors which are arranged in a five by five sensor matrix with the detected touch position near the center of the matrix. Such a size of the first touch sensor set may be adapted especially for touch panels of a mobile device comprising for example 23 rows and 12 columns. However, the number of rows and columns of the grid of the touch panel is not restricted to these numbers and may be any other as required by the application. For example, the number of rows may be in the range of 10 to 300 or preferably in the range from 10 to 50. Also the number of columns may be in the range of 10 to 300 and preferably in the range from 1 to 50. For example, in case of a touch panel of a tablet PC with a 10" touch screen and a sensor pitch of 1 mm the grid may comprise about 220 rows and about 125 columns.

According to another embodiment, the detected touch position is a first touch position and a second touch position of the object is detected based on the scanning of the touch sensors of the first touch sensor set and the scanning of the proper subset of the touch sensors of the second touch sensor set. Therefore, the second touch position can be detected with a high accuracy at a high speed. A future third touch position of the object may be predicted based on the first touch position and the second touch position. The prediction may be based on a speed and direction of the object determined by evaluating the first and second touch positions. Based on the predicted third touch position, a further first touch sensor set and a further second touch sensor set are determined. The further first touch sensor set comprises those touch sensors which are arranged in the predetermined distance to the predicted third touch position and the further second touch sensor set comprises those touch sensors which are arranged outside the predetermined distance to the predicted third touch position. Then, the touch sensors of the further first touch sensor set and a proper subset of the touch sensors of the further second touch sensor set are scanned. Under the assumption of a good prediction of the third touch position, the third touch position can be scanned with a high precision as it is located within the further first touch sensor set. The remaining touch sensors, which are located in the further second touch sensor set, are only scanned partly, which increases the scanning speed.

According to an aspect of the present invention, a control device for controlling a touch panel is provided. The touch panel comprises a plurality of touch sensors arranged at the touch panel. The control device comprises interface ports for coupling to the touch sensors of the touch panel. The control device comprises furthermore a processing unit configured to detect a touch position where an object touches the touch panel. Furthermore, the processing unit is configured to determine a first touch sensor set based on the touch position and to determine a second touch sensor set based on the touch position. The first touch sensor set comprises those touch sensors of the plurality of touch sensors which are arranged within a predetermined distance to the touch position. The second touch sensor set comprises the touch sensors of the touch panel which are arranged outside the predetermined distance to the touch position, which means that the second touch sensor set comprises the remaining touch sensors. The processing unit is configured to scan the touch sensors of the first touch sensor set and to scan a proper subset of the touch sensors of the second touch sensor set. In other words, after having detected a touch position, the processing unit scans in a subsequent scan all sensors within a predetermined distance to the touch position, which are the touch sensors of the first touch sensor set, and scans additionally only a part of the remaining touch sensors, which are the touch sensors of the second touch sensor set. Therefore, the detection of a touch position can be performed in the subsequent scan with a high precision assuming that the touch position has only moved within the predetermined distance, and additionally the remaining area of the touch panel can be scanned in a very short time to detect a touch position of for example a further object or if the object has moved out of the area defined by the predetermined distance.

According to an embodiment, the control device is configured to perform the above-described method and embodiments of the method. Therefore, the mobile device comprises the above-described advantages.

According to a further embodiment, the mobile device comprises a multiplexer coupled between one of the interface ports and at least two of the touch sensors. For example, in case the sensors are arranged in a grid of rows and columns, the multiplexer may be coupled between one of the interface ports and at least two of the rows or columns. Thus, the amount of scanned rows or columns can be locally increased in an area where for example an object has been detected before. This can be done by multiplexing the sensors. Thus, a control device with a limited number of interface ports can be used at a higher spatial precision. This may be used to increase the accuracy and signal-to-noise ratio for stylus support, especially for a pen-like stylus, and other small objects.

According to a further embodiment, the mobile device comprises a mobile phone, a personal digital assistant, a mobile music player, a tablet computer or a tablet PC, a laptop computer, a notebook computer, or a navigation system.

Although specific features described in the above summary and the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows schematically a mobile device according to an embodiment of the present invention.
Fig. 2 shows schematically method steps of a method according to an embodiment of the present invention.
Fig. 3 shows schematically a scanning of touch sensors according to an embodiment of the present invention.
Fig. 4 shows schematically a scanning of touch sensors according to a further embodiment of the present invention.
Fig. 5 shows schematically a scanning of touch sensors according to yet another embodiment of the present invention.
Fig. 6 shows schematically an arrangement of multiplexers in combination with touch sensors according to an embodiment of the present invention.

### DETAILED DESCRIPTION OF PREFERRED EMBODIMENTS

In the following, exemplary embodiments of the invention will be described in more detail. It has to be understood that the features of the various exemplary embodiments described herein may be combined with each other unless specifically noted otherwise. Same reference signs in the various drawings refer to similar or identical components.

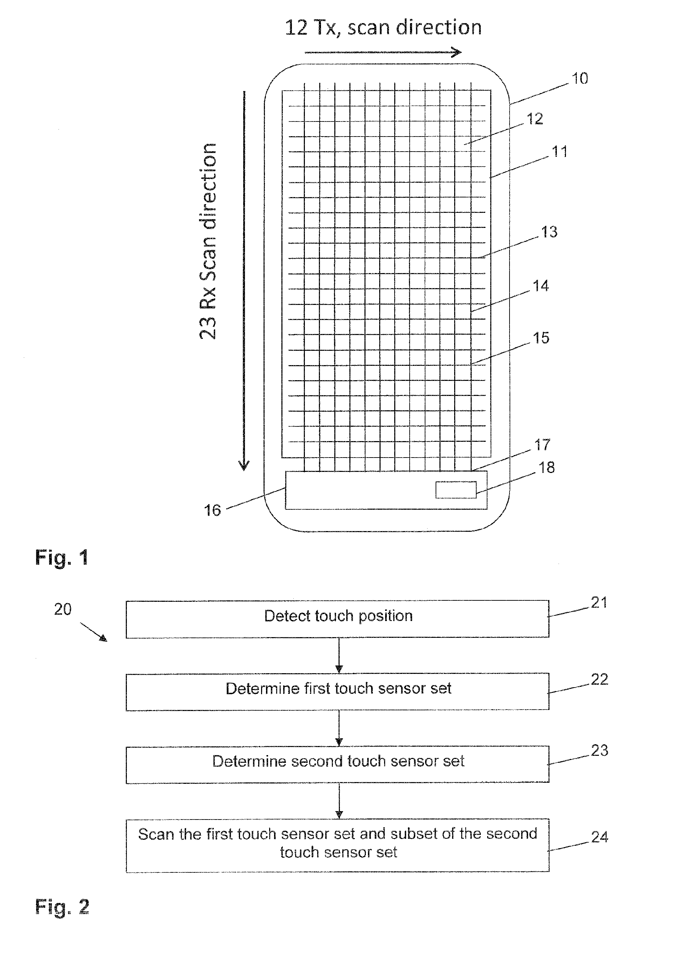

Fig. 1 shows a mobile device 10, for example a mobile phone or a mobile music player. The mobile device 10 comprises a display 11 and a touch panel 12 arranged in combination with display 11. The combination of display 11 and touch panel 12 forms a so-called touch screen. The touch panel 12 comprises a plurality of touch sensors which are arranged in rows 13 and columns 14. At each crossing point of the rows 13 and the columns 14 a sensor 15 is arranged. In the embodiment shown in Fig. 1, the touch panel 12 comprises 23 rows and 12 columns. This results in a total of 276 sensors 15. However, the number of rows and columns shown in Fig. 1 is just an exemplary embodiment and any other number of rows and columns may be utilized in connection with the present invention. The mobile device 10 comprises furthermore a control device 16 for scanning the sensors 15 to detect a touch position where an object touches the touch panel 12. The touch panel 12 may utilize a capacitive effect for detecting the touch position where the object touches the touch panel 12. However, the touch panel 12 may be based on any other technology, and may comprise for example a resistive or a capacitive or even an optical touch panel. The control device 16 comprises a plurality of interface ports 17 which are coupled to the rows 13 and the columns 14. For clarity reasons, in Fig. 1 only the coupling to the columns 14 is shown. The control device 16 may scan the touch sensors 15 in the scan directions indicated by the arrows in Fig. 1. For example, the control device 16 may transmit (Tx) a scan signal to each of the columns subsequently and may receive (Rx) signals from the rows 13 for evaluating a touch position where an object touches the touch panel. The processing of the control device 16 may be performed in a processing unit 18, for example a microprocessor or a controller. The functioning of the control device 16 will be explained in the following in connection with Figs. 2-5 in more detail.

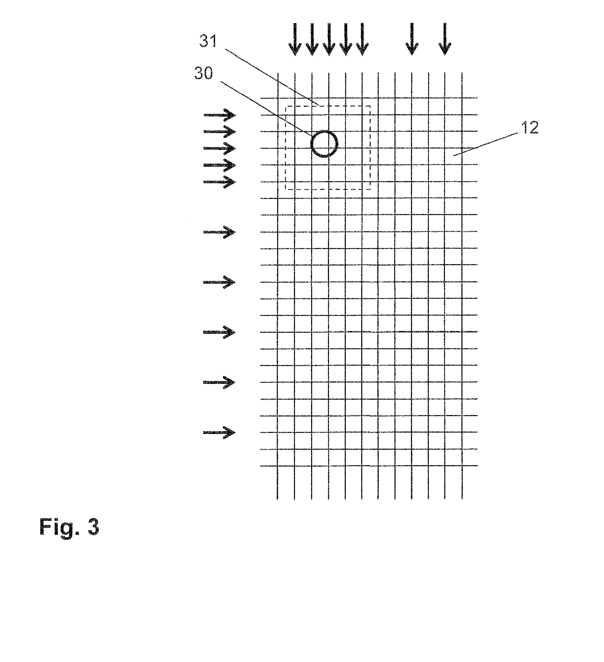

Fig. 2 shows a method 20 comprising method steps 21-24. In step 21 a touch position where an object touches the touch panel 12 is detected. The touch position may be detected by scanning all the touch sensors 15 or by a so-called partial scanning which will be described in more detail in the following. Based on the touch position, in step 22 a first touch sensor set is determined. The first touch sensor set comprises touch sensors of the touch panel which are arranged within a predetermined distance to the detected touch position. Fig. 3 shows for example a touch position 30 which has been detected in step 21. The predetermined distance may comprise a distance in the direction of the rows and a distance in the direction of the columns. As indicated in Fig. 3, the first touch sensor set comprises all touch sensors within the dashed square 31. In step 23 a second touch sensor set is determined comprising those touch sensors which are arranged outside the predetermined distance to the touch position 30. Therefore, with reference to Fig. 3, the second touch sensor set comprises all touch sensors which are arranged outside the square 31. In step 24 the touch sensors of the first touch sensor set and a proper subset of the touch sensors of the second touch sensor set are scanned. This will be explained in more detail in connection with Fig. 3.

In the scanning cycle of step 24 all touch sensors within the square 31 are scanned. The corresponding rows and columns are marked with arrows in Fig. 3. Additionally, only a proper subset of the remaining touch sensors are scanned. The corresponding rows and columns of these touch sensors are also indicated by the arrows in Fig. 3. As can be seen, outside of the square 31, only every third row and only every third column is scanned. In the example shown in Fig. 3 the touch panel 12 is touched at a single point 30. In the area indicated by the square 31 where the touching object is detected, every channel is going to the scanned to get the correct accuracy and sensitivity. The other parts of the touch panel 12 will be scanned, but only every other or only every third channel, as indicated in Fig. 3, is scanned. This number could be varied depending on the sensor pitch and the numbers of channel. In this example, only 70 nodes are scanned instead of 276. Therefore, in this case, the scan rate can be increased by almost a factor of four without reducing spatial resolution. However, it is still possible to detect another event on the touch panel and thus the full touch area is covered.

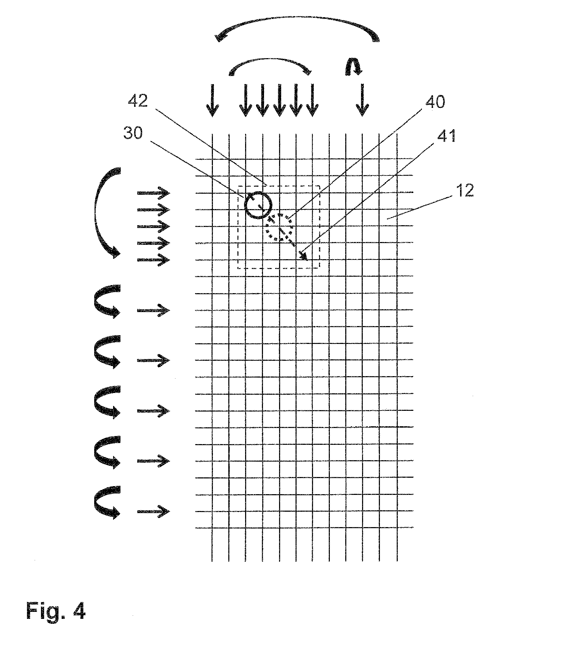

Fig. 4 shows the partial touch sensor scanning if the touching object, for example a finger, is moved. If the finger is moved in any direction, the scan areas will follow. However, additionally a prediction algorithm may be used to predict a future touch position based on a detected speed and direction of the movement of the touching object. For example, a touch has been detected at the location indicated by the reference sign 30 in Fig. 4, and a moving direction in the direction of arrow 41 and a moving speed have been determined based on past touch detections. Based on the determined direction 41 and the determined speed of the touching object, a future touch position 40 can be predicted. Therefore, the first touch sensor set is adapted accordingly to the predicted touch position 40 as indicated by the square 42. In the next scanning cycle, the sensors within the square 42 will be scanned completely and the touch sensors outside the square 42 will be scanned partially as described above. As indicated by the bended arrows in Fig. 4, the rows and columns which are to be scanned are moving together with the detected touch position and the predicted touch position.

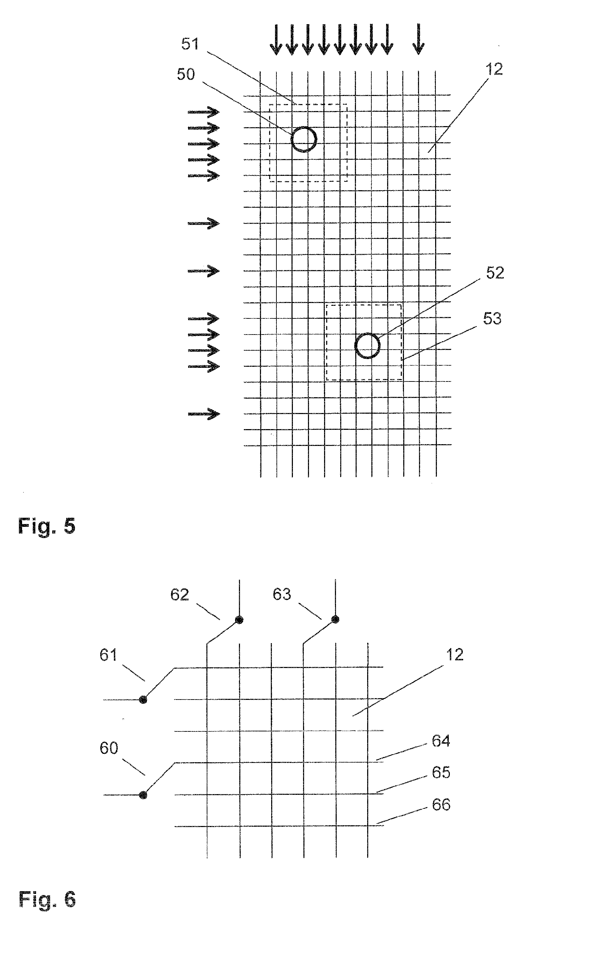

Fig. 5 shows a case in which two objects are touching the touch panel 12. In this case, for each touch position 50, 52 detected, a corresponding first touch sensor set 51, 53 is determined which will be scanned completely during a next scan, and a second touch sensor set comprising the remaining touch sensors will be only scanned partly in the next scan. The first touch sensor set associated with the touch position 50 is indicated by the square 51 and the second touch sensor set associated with the touch position 52 is indicated by the square 53. In this case, 108 sensors need to be scanned instead of 276. Therefore, the partial scanning enables even in case of two touch positions to double the scanning speed. Although in Fig. 5 two touch positions are shown in connection with the partial scanning of the touch panel, the present invention is not restricted to two touch positions. Rather, the partial scanning may be combined advantageously with any number of touch positions, e.g. three or more touch positions, especially in connection with larger touch panels of e.g. tablet PCs.

To sum up, with the above-described partial scanning, scanning latency can be improved. For example, if a touch panel can be scanned 60 times per second with a complete non-partial scan, the scan frequency can be increased to 240 scans per second when only one object is touching the touch panel and still to 120 scans per second when two objects are touching the touch panel.

Fig. 6 shows a way to improve the special resolution for detecting a touch position. If the number of rows or columns of the touch panel 12 is increased, the corresponding control device 16 needs to provide a larger number of interface ports 17 for controlling the increased number of rows and columns. However, such control devices may not be available or may be available at higher cost only. In this case, multiplexers may be used to couple the rows and columns of the grid of the touch panel to the restricted number of interface ports of the control device 16. For example, every interface port may be coupled to a 3-to-1-multiplexer and each of the multiplexers may be coupled to three rows or columns of the grid of the touch panel 12. Thus, the control device can scan a considerable larger number of touch sensors which may increase the spatial accuracy for detecting a touch position where an object touches the touch panel 12, especially in case the object used to touch the touch panel comprises a pen-like stylus.

## Claims

1. A method for operating a touch panel, the touch panel (12) comprising a plurality of touch sensors (15) arranged at the touch panel (12) for detecting a touch position (30, 50, 52) where an object touches the touch panel (12), the method comprising:
- detecting a touch position (30, 50, 52),
- determining a first touch sensor set (31, 51, 53) based on the touch position (30, 50, 52), wherein the first touch sensor set (31, 51, 53) comprises touch sensors (15) of the plurality of touch sensors arranged within a predetermined distance to the touch position (30, 50, 52),
- determining a second touch sensor set based on the touch position (30, 50, 52), wherein the second touch sensor set comprises touch sensors (15) of the plurality of touch sensors arranged outside the predetermined distance to the touch position (30, 50, 52),
- scanning the touch sensors (15) of the first touch sensor set (31, 51, 53), and
- scanning a proper subset of the touch sensors (15) of the second touch sensor set.

2. The method according to claim 1, wherein the plurality of touch sensors is arranged in a grid comprising a plurality of rows (13) and a plurality of columns (14), each of the touch sensors (15) being associated with a corresponding crossing point of the rows (13) and columns (14),
wherein the proper subset comprises touch sensors (15) associated with every n-th row (13) and every m-th column (14) of the grid, wherein n and m are integers and the sum n+m is at least 3.

3. The method according to claim 2, wherein m=3 and n=3.

4. The method according to any one of the preceding claims, wherein the plurality of touch sensors is arranged in a grid comprising a plurality of rows (13) and a plurality of columns (14), each of the touch sensors (15) being associated with a corresponding crossing point of the rows (13) and columns (14),
wherein the first touch sensor set (31, 51, 53) comprises touch sensors (15) which are associated with rows (13) arranged within a first predetermined distance to a row (13) of the touch position (30, 50, 52) and which are associated with columns (14) arranged within a second predetermined distance to a column (14) of the touch position (30, 50, 52).

5. The method according to claim 4, wherein the rows (13) are arranged in the grid at a first uniform distance between the rows (13), and wherein the first predetermined distance is two times the first uniform distance.

6. The method according to claim 4 or 5, wherein the columns (14) are arranged in the grid at a second uniform distance between the columns (14), and wherein the second predetermined distance is two times the second uniform distance.

7. The method according to any one of claims 2-6, wherein the number of rows (13) is in the range from 10 to 300, preferably in the range from 10 to 50, and the number of columns (14) is in the range from 10 to 300, preferably in the range from 10 to 50, and more preferably the number of rows (13) is 23 and the number of columns (14) is 12.

8. The method according to any one of the preceding claims, wherein the detected touch position is a first touch position (30), wherein the method furthermore comprises:
- detecting a second touch position of the object based on the scanning of the touch sensors (15) of the first touch sensor set (31, 51, 53) and the scanning of the proper subset of the touch sensors (15) of the second touch sensor set,
- predicting a future third touch position (40) of the object based on the first touch position (30) and the second touch position, and
- determining a further first touch sensor set (42) based on the third touch position (40), wherein the further first touch sensor set (42) comprises touch sensors (15) of the plurality of touch sensors arranged within the predetermined distance to the third touch position (40),
- determining a further second touch sensor set based on the third touch position (40), wherein the further second touch sensor set comprises touch sensors (15) of the plurality of touch sensors arranged outside the predetermined distance to the third touch position (40), and
- scanning the touch sensors (15) of the further first touch sensor set (42) and scanning a proper subset of the touch sensors (15) of the further second touch sensor set.

9. A control device for controlling a touch panel, the touch panel (12) comprising a plurality of touch sensors (15) arranged at the touch panel (12), wherein the control device (16) comprises:
- interface ports (17) for coupling to the touch sensors (15), and
- a processing unit (18) configured to
- detect a touch position (30, 50, 52) where an object touches the touch panel (12),
- determine a first touch sensor set (31, 51, 53) based on the touch position (30, 50, 52), wherein the first touch sensor set (31, 51, 53) comprises touch sensors (15) of the plurality of touch sensors arranged within a predetermined distance to the touch position (30, 50, 52),
- determine a second touch sensor set based on the touch position (30, 50, 52), wherein the second touch sensor set comprises touch sensors (15) of the plurality of touch sensors arranged outside the predetermined distance to the touch position (30, 50, 52),
- scan the touch sensors (15) of the first touch sensor set (31, 51, 53), and
- scan a proper subset of the touch sensors (15) of the second touch sensor set.

10. The control device according to claim 9, wherein the control device (16) is configured to perform the method according to any one of claims 1-8.

11. A mobile device comprising a touch panel (12) and a control device (16) according to claim 9 or 10.

12. The mobile device according to claim 11, wherein the mobile device (10) comprises a multiplexer (60-63) coupled between one of the interface ports (17) and at least two of the touch sensors (15).

13. The mobile device according to claim 11 or 12, wherein the mobile device (10) comprises at least one device of a group consisting of a mobile phone, a personal digital assistant, a mobile music player, a tablet computer, a laptop computer, a notebook computer, and a navigation system.
